# EUROPEAN PATENT SPECIFICATION

(11) **EP 2 320 041 B1**
(45) Date of publication and mention of the grant of the patent: **12.03.2014**
(21) Application number: 09803023.2
(22) Date of filing: 30.07.2009
(51) Int. Cl.: F01N 3/02, F02D 45/00, B01D 46/42, B01D 53/94

(54) **EXHAUST PURIFYING DEVICE FOR INTERNAL COMBUSTION ENGINE**
ABGASREINIGUNGSVORRICHTUNG FÜR EINEN VERBRENNUNGSMOTOR
DISPOSITIF DE PURIFICATION D'ÉCHAPPEMENT POUR MOTEUR À COMBUSTION INTERNE

(30) Priority: 31.07.2008 JP 2008197872
(43) Date of publication of application: 11.05.2011
(73) Proprietor: Kabushiki Kaisha Toyota Jidoshokki, Kariya-shi Aichi 448-8671 (JP); TOYOTA JIDOSHA KABUSHIKI KAISHA, Toyota-shi, Aichi-ken, 471-8571 (JP)
(72) Inventor: KOIE, Masanao, Kariya-shi, Aichi 448-8671 (JP); TSUZUKI, Naoyuki, Toyota-shi, Aichi 471-8571 (JP)
(74) Representative: TBK
(86) International application number: PCT/JP2009/063589
(87) International publication number: WO 2010/013781

(56) References cited:
- FR-A1- 2 862 103
- FR-A1- 2 906 301
- JP-A- 7 259 538
- JP-A- 2006 274 843

## Description

### TECHNICAL FIELD

The present invention relates to an exhaust purifying device that captures PM suspended in the exhaust of an internal combustion engine and properly burns and removes the PM.

### BACKGROUND ART

One known type of an exhaust purifying device arranged in an exhaust gas passage of an internal combustion engine is a device that includes a filter to capture particulate matter (PM) suspended in exhaust. In such an exhaust purifying device, the filter increases pressure loss as the amount of PM captured in the filter increases. This lowers the engine output. Thus, in such an exhaust purifying device, the filter temperature is raised to perform a regeneration process that regenerates the capturing function of the filter by burning the PM captured in the filter.

Generally, the exhaust temperature greatly affects the filter temperature. Thus, when such filter regeneration process is commenced, the exhaust temperature is raised by controlling the operation state of the internal combustion engine. This changes the engine output and combustion noise. Thus, the engine output and combustion noise change regardless of the driver's will and disturbs the driver. Such disturbance is not a problem with respect to the functions of the vehicle but cannot be overlooked since there is a strong demand for luxuriousness in the field of automobiles over these recent years.

Patent literature 1 describes an exhaust purifying device for an internal combustion engine that limits the timing for commencing the regeneration process to a state in which the shaft output torque of an engine output shaft is zero so that the shaft output torque does not vary before and after commencing the regeneration process. This avoids the regeneration process from being commenced under conditions in which the shaft output torque is apt to vary. Thus, the disturbance felt by the driver as described above is reduced.

### PRIOR ART LITERATURE

### PATENT LITERATURE

Japanese Laid-Open Patent Publication No. 2004-346836 and French Patent FR 2906301.

### SUMMARY OF THE INVENTION

### PROBLEMS THAT ARE TO BE SOLVED BY THE INVENTION

However, the shaft output torque does not often become zero, which is the condition for commencing the regeneration process. Accordingly, even though the accumulation amount of PM captured in the filter reaches a regeneration process commencement value, the commencement of the regeneration process may be greatly delayed. The problem that occurs when commencing the regeneration process as discussed above also occurs when terminating the regeneration process.

It is an object of the present invention to provide an exhaust purifying device for an internal combustion engine that reduces the disturbance felt by a driver when commencing or terminating a regeneration process, while allowing for commencement and termination of the regeneration process under various operation situations.

### MEANS FOR SOLVING THE PROBLEMS

To achieve the above object, one aspect of the present invention is an exhaust purifying device for an internal combustion engine including a filter disposed in an exhaust passage for capturing PM suspended in exhaust. The exhaust purifying device estimates an accumulation amount of the PM accumulated in the filter. Further, the exhaust purifying device performs a regeneration process under the condition that the estimated accumulation amount is greater than or equal to a predetermined regeneration commencement value to regenerate a PM capturing capacity of the filter by varying an operation state of the internal combustion engine to bum and remove the PM. The exhaust purifying device also terminates the regeneration process under the condition that the estimated accumulation amount is less than or equal to a predetermined regeneration termination value. The exhaust purifying device includes at least one of a regeneration process commencement retardation unit and a regeneration process termination retardation unit. The regeneration process commencement retardation unit retards a commencement timing of the regeneration process until an operation state of an accelerator is varied. The regeneration process termination retardation unit retards a termination timing of the regeneration process until the operation state of the accelerator is varied.

The regeneration process termination retardation unit terminates the regeneration process under the condition that the accelerator is operated to be deactivated.

In this invention, the commencement timing and termination timing of the filter regeneration process are synchronized with when the driver varies the operation state of the accelerator, which frequently occurs. This makes it difficult for the driver to recognize whether changes in the engine output and combustion noise occurred due to the operation state of the accelerator that was varied by the driver or due to the commencement or termination of the engine output. This lowers the possibility of changes in the engine output and combustion noise that would result in a disturbing feeling. Accordingly, the disturbance felt by the driver is reduced when commencing and terminating the regeneration process. Further, the driver frequently varies the operation state of the accelerator. Thus, the timings for commencing and terminating the regeneration process are not significantly delayed, and adverse effects of the regeneration process are minimized.

In this invention, when the accelerator is operated to be deactivated, the engine output and combustion noise are suddenly changed and decreased. Thus, the changes in the engine output and combustion noise are relatively large. Accordingly, the termination of the regeneration process under such a situation results in changes in the engine output and combustion noise being noticed less by the driver.

Preferably, the regeneration process termination retardation unit terminates the regeneration process under the condition that the accelerator is operated to decrease an operation amount of the accelerator by a predetermined amount or greater.

Preferably, the regeneration process termination retardation unit terminates the regeneration process under the condition that the accelerator is operated to increase an operation amount of the accelerator by a predetermined amount or greater.

The predetermined amount refers to the varied amount of the accelerator pedal operation amount at which the changes in the engine output and combustion noise caused by operating the accelerator pedal are greater than the changes in the engine output and combustion noise caused by terminating the regeneration process. Accordingly, the termination of the regeneration process under such a situation results in changes in the engine output and combustion noise caused by the regeneration process termination being noticed less by the driver.

Preferably, the regeneration process commencement retardation unit commences the regeneration process under the condition that the accelerator is operated to be deactivated.

In this invention, when the accelerator is operated to be deactivated, the engine output and combustion noise are suddenly changed and decreased. Thus, the changes in the engine output and combustion noise are relatively large. Accordingly, the commencement of the regeneration process under such a situation results in changes in the engine output and combustion noise being noticed less by the driver.

Preferably, the regeneration process commencement retardation unit commences the regeneration process under the condition that the accelerator is operated to decrease an operation amount of the accelerator by a predetermined amount or greater.

Preferably, the regeneration process commencement retardation unit commences the regeneration process under the condition that the accelerator is operated to increase an operation amount of the accelerator by a predetermined amount or greater.

The predetermined amount refers to the varied amount of the accelerator pedal operation amount at which the changes in the engine output and combustion noise caused by operating the accelerator pedal are greater than the changes in the engine output and combustion noise caused by commencing the regeneration process. Accordingly, the commencement of the regeneration process under such a situation results in changes in the engine output and combustion noise caused by the regeneration process commencement being noticed less by the driver.

### BRIEF DESCRIPTION OF THE DRAWINGS

Fig. 1 is schematic view showing an engine, to which an exhaust purifying device according to one embodiment of the present invention is applied, and peripheral structures of the engine;
Fig. 2 is a flowchart showing the control procedures for commencing a regeneration process;
Fig. 3 is a flowchart showing the control procedures for terminating the regeneration process; and
Fig. 4 is a time chart showing the control procedures when commencing and terminating the regeneration process.

### EMBODIMENTS OF THE INVENTION

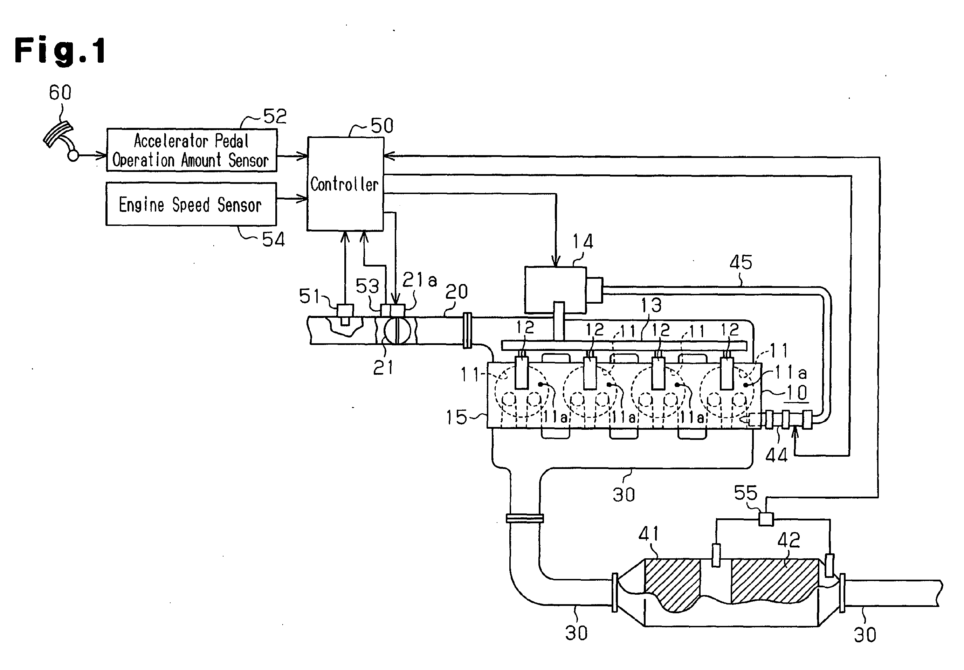

An exhaust purifying device for a diesel engine according to one embodiment of the present invention will now be discussed with reference to Figs. 1 to 4. Fig. 1 is a schematic diagram showing a diesel engine 10 (hereinafter simply referred to as the engine 10), to which an exhaust purifying device according to one embodiment of the present invention is applied, and its peripheral structures.

As shown in Fig. 1, the engine 10 includes a plurality of cylinders 11, with each cylinder 11 defining a combustion chamber 11a connected to an intake passage 20 and an exhaust passage 30. An intake throttle valve 21, which opens and closes when driven by a stepping motor 21a, is arranged in the intake passage 20. The open amount of the intake throttle valve 21 is varied to adjust the amount of air drawn into each combustion chamber 11a. A fuel injection valve 12 is arranged in each combustion chamber 11a. The fuel injection valves 12 are connected to a common rail 13 and inject fuel from the common rail 13 into the combustion chambers 11a. A supply pump 14 supplies the common rail 13 with fuel from a fuel tank (not shown).

The exhaust passage 30 has a downstream portion including a catalytic converter 41 and a filter 42. The catalytic converter 41 and the filter 42 each carry an oxidation catalyst. Further, the filter 42 is formed by a porous ceramic structure that captures the PM suspended in the exhaust when the exhaust passes through its porous walls.

A fuel additive valve 44 is coupled to a cylinder head 15 to supply the catalytic converter 41 with fuel that serves as an additive. The fuel additive valve 44 is connected to the supply pump 14 by a fuel supply pipe 45. The fuel additive valve 44 injects fuel toward exhaust ports, which connect the combustion chambers 11a and the exhaust passage 30. The injected fuel is the sent to the catalytic converter 41 together with the exhaust.

The engine 10 includes various types of sensors that detect the engine operation state. For example, an air flow meter 51 detects the intake air amount (intake air amount per unit time). An accelerator pedal operation amount sensor 52, which serves as an accelerator operation amount sensor, detects the operation amount of an accelerator pedal 60 (accelerator operation amount). A throttle valve open amount sensor 53 detects the open amount of the throttle valve 21. An engine speed sensor 54 detects the engine speed. A differential pressure sensor 55 detects the pressure difference A between the exhaust gas pressures at the upstream and downstream sides of the filter 42 with respect to the flow of exhaust.

The output from each sensor is sent to a controller 50. The controller 50 is a microcomputer of which main components are a central processing unit (CPU), a read only memory (ROM) that stores in advance various types of programs, maps, and the like, a random access memory (RAM) that temporarily stores CPU computation results and the like, a time counter, an input interface, an output interface, and the like. The controller 50 controls the fuel injection timing and fuel injection amount of the fuel injection valves 12 based on the output signals from the various types of sensors described above. As part of an exhaust gas purifying process, the controller 50 executes a control for raising the temperature of the exhaust discharged from the combustion chambers 11a and a control for injecting fuel from the fuel additive valve 44.

The regeneration process performed on the filter 42 will be further described. The filter 42 is regenerated by heating the exhaust passing through the filter 42 to a high temperature in order to bum and remove PM within a short period of time. However, to bum and remove the PM within a short period of time, the passing exhaust must be heated to a high temperature of 600 degrees or greater. A plurality of means may be combined to realize the high temperature as is known in the art. In the present embodiment, the fuel injection timing of each fuel injection valve 12 is retarded to raise the temperature of the exhaust discharged from the corresponding combustion chamber 11a. In addition, the fuel additive valve 44 injects fuel so that the fuel causes an oxidation reaction in the catalytic converter 41 that generates heat. This further raises the temperature of the exhaust at the upstream side of the filter 42. Although the present embodiment retards the fuel injection timing of the fuel injection valves 12, the exhaust gas temperature may be raised through other ways of varying the operation state of the engine 10 such as by performing post injection with the fuel injection valves and reducing the open amount of the intake throttle valve 21.

When the regeneration process commences, the fuel injection timing of the fuel injection valve 12 is firstretarded. Any of the two procedures described above may be performed to raise the exhaust temperature. Further, by first raising the temperature of the exhaust discharged from the combustion chambers 11a, the catalytic converter becomes further active and the atomization (gasification) of the fuel injected from the fuel additive valve 44 is enhanced. After the operation state of the engine 10 varies as described above, the fuel additive valve 44 performs fuel addition. The fuel injected from the fuel additive valve 44 in this manner undergoes an oxidation reaction when reaching the catalytic converter 41. This raises the exhaust temperature. When the exhaust, the temperature of which has been raised by the catalytic converter 41, enters the filter 42, the temperature of the filter 42 is raised. This burns and removes the PM accumulated in the filter 42 thereby regenerating the filter 42.

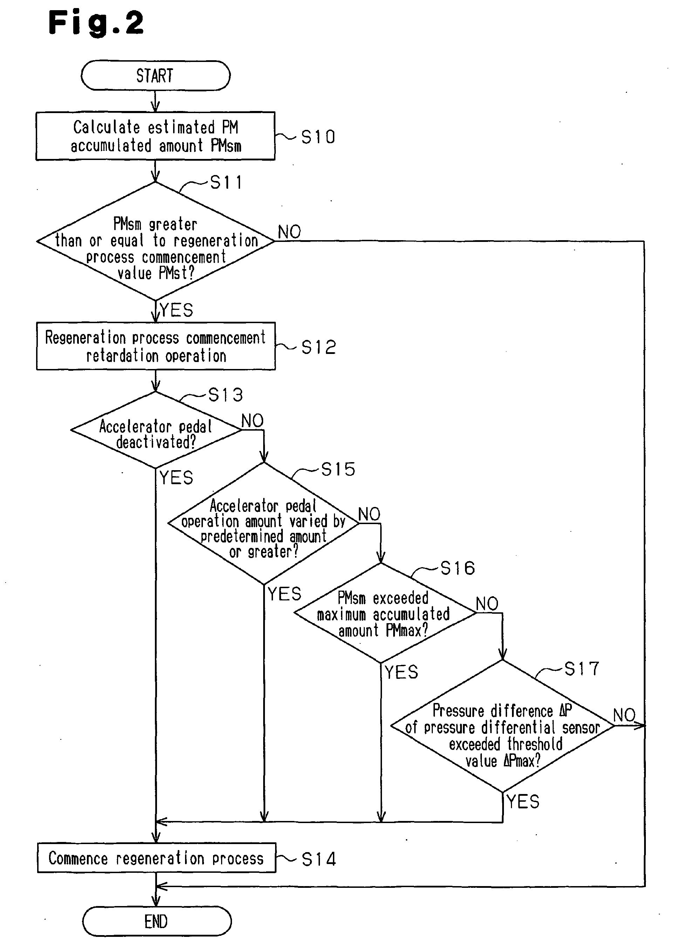

The control procedures taken by the controller 50 of the present embodiment when commencing the regeneration process will now be described with reference to the flowchart of Fig. 2. The controller 50 repeats the sequence of processes shown in the flowchart of Fig. 2 in predetermined control cycles. In the sequence of processes, the amount of PM discharged from the combustion chambers 11a of the engine 10 (PM discharge amount) is obtained from a map, which is set in advance based on experiments or the like. By repetitively adding the PM discharge amount in predetermined cycles, the controller calculates an estimated PM accumulation amount PMsm, which is the estimated value of the PM amount accumulated in the PM (step S10).

Then, the controller 50 determines whether or not the estimated PM accumulation amount PMsm, which was calculated in step S10, is greater than or equal to a regeneration process commencement value PMst (step S11). When an affirmative determination is given in step S11, the controller 50 performs a regeneration process commencement retardation operation to retard the execution of the regeneration process until an accelerator pedal operation or the like is performed (step S12). When a negative determination is given in step S11, the controller 50 ends the sequence of processes.

Further, the controller 50 determines whether the accelerator pedal 60 that has been operated by the driver has shifted to a deactivated state in which the accelerator pedal 60 is no longer depressed, that is, whether the accelerator pedal 60 has been released and is no longer depressed (step S13). When an affirmative determination is given in step S13, the controller 50 commences the regeneration process (step S14). When a negative determination is given in step S13, the controller 50 determines whether or not the accelerator pedal operation performed by the driver has varied the accelerator pedal operation amount by a predetermined amount or greater (step S15). More specifically, the controller 50 determines whether or not the accelerator pedal operation amount has been decreased by a predetermined amount or greater. The predetermined amount refers to the varied amount of the accelerator pedal operation amount at which the changes in the engine output and combustion noise caused by varying the accelerator pedal operation amount are greater than the changes in the engine output and combustion noise caused by commencing the regeneration process. When an affirmative determination is given in step S15, the controller 50 proceeds to step S14. In this manner, the controller 50 functions as a regeneration process commencement retardation unit that retards the timing for commencing the regeneration process by performing a process that proceeds from step S12 to step S13 and then to step S14 and a process that proceeds from step S12 to steps S13 and S15 and then to step S14.

When a negative determination is given in step S15, the controller 50 determines whether or not the estimated PM accumulation amount PMsm has exceeded the maximum accumulation amount PMmax that can be accumulated in the filter 42 (step S16). When an affirmative determination is given in step S16, the controller 50 proceeds to step S14 to invalidate the commencement retardation operation for the regeneration process that is based on the accelerator pedal operation and forcibly commences the regeneration process. When a negative determination is given in step S16, the controller 50 determines whether or not the pressure difference ΔA, which is detected by the differential pressure sensor 55, has exceeded a threshold value ΔPmax (step S17). The pressure difference ΔP of the upstream and downstream sides with respect to the flow of exhaust has a high correlation with the PM accumulation amount. When the pressure difference ΔP takes a large value, this indicates that the actual PM accumulation amount is large. The threshold value ΔPmax is a value corresponding to the pressure difference allowing for determination that the estimated PM accumulation amount PMsm has exceeded the maximum accumulation amount PMmax of PM that can be accumulated in filter 42. When an affirmative determination is given in step S17, the controller 50 proceeds to step S14 to invalidate the commencement retardation operation for the regeneration process based on the accelerator pedal operation and forcibly execute the regeneration process. When a negative determination is given in step S17, the controller 50 temporarily ends the sequence of processes.

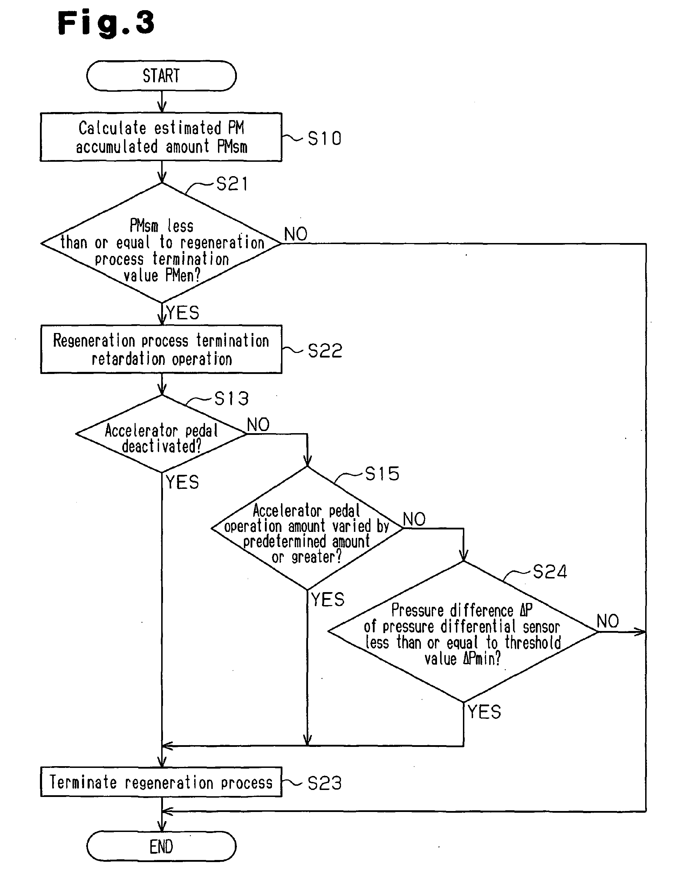

Next, the control procedures for terminating the regeneration process with the controller 50 of the present embodiment will be described with reference to the flowchart of Fig. 3. The controller 50 repeats the sequence of processes shown in the flowchart of Fig. 3 in predetermined control cycles. In the sequence of processes, the PM discharge amount is first added in the same manner as the procedures performed when commencing the regeneration process. Thus, the controller 50 calculates the estimated PM accumulation amount PMsm, which is the estimated value of the PM amount accumulated in the filter 42 (step 10). Then, the controller 50 determines whether or not the estimated PM accumulation amount PMsm calculated in step S10 is less than or equal to a regeneration process termination value PMen (<regeneration process commencement value PMst) (step S21). When an affirmative determination is given in step S21, the controller 50 performs a regeneration process termination retardation operation to retard termination of the regeneration process until an accelerator pedal operation or the like is performed by the driver (step S22). When a negative determination is given in step S21, the controller 50 terminates the sequence of processes.

Then, the controller 50 determines whether the accelerator pedal 60 has shifted from a state depressed by the driver to a deactivated state in which the accelerator pedal 60 has been released and is no longer depressed (step S13). When an affirmative determination is given in step S13, the controller 50 terminates the regeneration process (step S23). When a negative determination is given in step S13, the controller 50 determines whether or not the accelerator pedal operation amount has been varied by a predetermined amount or greater (step S15). More specifically, the controller 50 determines whether or not the accelerator pedal operation amount has been decreased by a predetermined amount or greater. The predetermined amount refers to the varied amount of the accelerator pedal operation amount at which the changes in the engine output and combustion noise caused by varying the accelerator pedal operation amount are greater than the changes in the engine output and combustion noise caused by terminating the regeneration process. When an affirmative determination is given in step S15, the controller 50 proceeds to step S23. In this manner, the controller 50 functions as a regeneration process termination retardation unit that retards the timing at which the regeneration process terminates by performing a process that proceeds from step S22 to step S13 and then to step S23 and a process that proceeds from step S22 to steps S13 and S15 and then to step S23. That is, the controller 50 of the present embodiment functions as a regeneration process retardation unit that includes both regeneration process commencement retardation unit and regeneration process termination retardation unit.

When a negative determination is given in step S15, the controller 50 determines whether or not the pressure difference ΔP, which is detected by the differential pressure sensor 55, is less than or equal to the threshold value ΔPmin (step S24). When the pressure difference ΔP of the upstream and downstream sides is less than or equal to the threshold value ΔPmin (step S24), this indicates that the regeneration process has been completed, that is, the PM accumulated in the filter 42 is substantially "0". Accordingly, when an affirmative determination is given in step S24, the controller 50 proceeds to step S23 to invalidate the termination retardation operation for the regeneration process based on the accelerator pedal operation and forcibly terminate the regeneration process. When a negative determination is given in step S24, the controller 50 temporarily ends the sequence of processes.

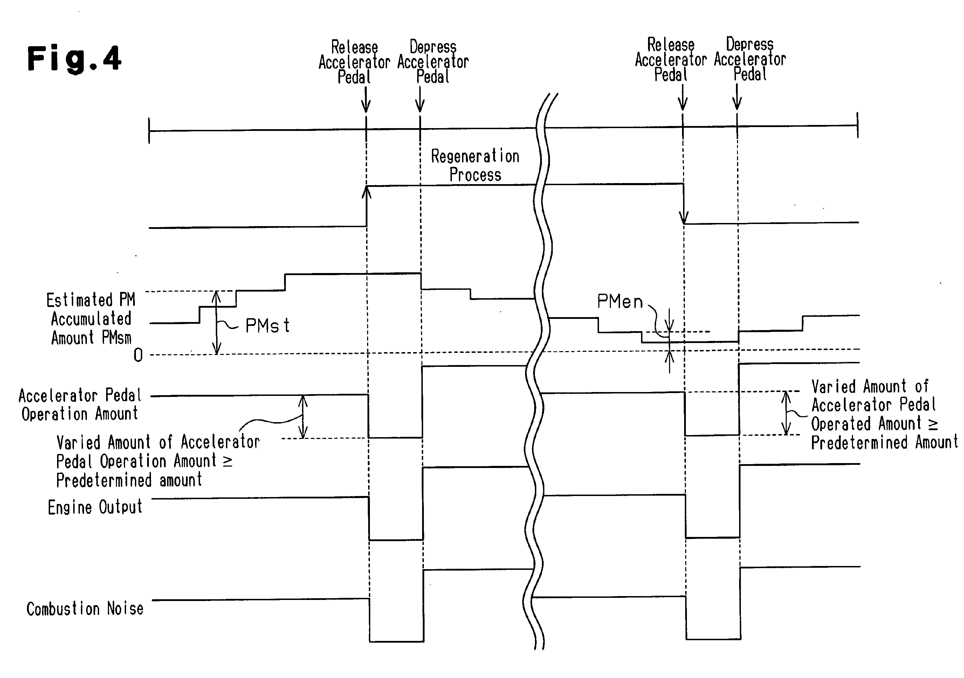

When the regeneration process is commenced, in contrast to normal operation, changes in the engine output and combustion noise cannot be avoided. Thus, during stable driving, that is, under a situation in which the driver is not performing any operations on the vehicle, commencement or termination of the regeneration process would cause a sense of disturbance. However, in step S13, when shifting from a state in which the accelerator pedal 60 is depressed to a state in which the accelerator pedal 60 is deactivated, the engine output and combustion noise would suddenly decrease. Thus, the changes in the engine output and combustion noise would be relatively large. Further, in step S15, when the accelerator pedal operation performed by the driver is varied by a predetermined amount or greater, the changes in the engine output and combustion noise would be relatively large as shown in Fig. 4. Accordingly, in the present embodiment, the commencement or termination of the regeneration process or both commencement and termination of the regeneration process are performed in synchronism with accelerator pedal operations that are often performed by the driver. This makes it difficult for the driver to determine whether the engine output and combustion noise have changed as a result of the accelerator pedal operation performed by the driver or by commencement or termination of the regeneration process. Thus, the possibility of such changes being felt by the driver is low.

The embodiment discussed above has the advantages described below.
(1) Under the condition that the operation state of the accelerator pedal 60 has been varied, that is, under the condition that the accelerator pedal 60 has been operated so that the accelerator pedal 60 is deactivated, the controller 50 commences and terminates the regeneration process. This would suddenly decrease the engine output and combustion noise. Thus, the changes in the engine output and combustion noise would be relatively large. Accordingly, the commencement and termination of the regeneration process under such a situation would result in the changes in the engine output and combustion noise being noticed less by the driver.
(2) Under the condition that the operation state of the accelerator pedal 60 has been varied, that is, under the condition that the accelerator pedal 60 has been operated so that the accelerator pedal operation amount has been varied (decreased) by a predetermined amount or greater, the controller 50 commences and terminates the regeneration process. This suddenly decreases the engine output and combustion noise. Accordingly, the commencement and termination of the regeneration process under a situation in which the changes in the engine output and combustion noise caused by varying the accelerator pedal operation amount is greater than the changes in the engine output and combustion noise caused by terminating and commencing the regeneration process. Thus, the commencement and termination of the regeneration process would result in the changes in the engine output and combustion noise being hardly felt by the driver.
(3) When the estimated PM accumulation amount PMsm exceeds the maximum accumulation amount PMmax of PM that may be accumulated in the filter 42, the controller 50 invalidates the commencement retardation operation of the regeneration process based on the accelerator pedal operation to forcibly execute the regeneration process. This avoids a situation in which the PM accumulation amount becomes excessive and prevents the PM capturing function of the filter 42 from becoming too low.
(4) When the pressure difference ΔP detected by the differential pressure sensor 55 exceeds the threshold value ΔPmax, the controller 50 invalidates the commencement retardation operation of the regeneration process based on the accelerator pedal operation to forcibly execute the regeneration process. This ensures that a situation in which the PM accumulation amount becomes excessive is avoided and prevents the PM capturing function of the filter 42 from becoming too low.

The present embodiment may be modified into forms described below.

The controller 50 may commence or terminate the regeneration process under the condition that the operation state of the accelerator pedal 60 is varied when the vehicle speed is higher than a predetermined speed. The predetermined speed is the vehicle speed at which a change in the vehicle noise caused by the vehicle speed is greater than a change in the combustion noise caused by commencing or terminating the regeneration process, with the amount of change in the engine output when commencing and terminating the regeneration process being small relative to the engine output generated at that vehicle speed. Accordingly, the commencement and termination of the regeneration process under such a situation would result in changes in the engine output and combustion noise caused when commencing and terminating the regeneration process being even less felt by the driver. Further, when the vehicle speed is greater than the predetermined speed, the regeneration process may be commenced and terminated even when the operation state of the accelerator pedal 60 is not varied.

The controller 50 does not have to function as a regeneration process retardation unit that includes both the regeneration process commencement retardation unit and the regeneration process termination retardation unit and may function only as a regeneration process commencement retardation unit. That is, in the control procedures of the controller 50 for terminating the regeneration process, when an affirmative determination is given in step S21, the controller 50 may directly proceed to step S23 without performing the termination retardation operation as described above. On the contrary, the controller 50 does not have to function as a regeneration process retardation unit including both the regeneration process commencement retardation unit and the regeneration process termination retardation unit and may function only as a regeneration process termination retardation unit. That is, in the control procedures of the controller 50 for commencing the regeneration process, when an affirmative determination is given in step S11, the controller 50 may directly proceed to step S14 without performing the commencement retardation operation as described above.

After performing the processing of step S12 or step S22, without determining whether or not the accelerator pedal 60 is deactivated in step S13, the controller 50 may proceed to step S15 and determine whether or not the accelerator pedal operation amount has been varied (decreased) for a predetermined amount or greater.

The controller 50 may commence or terminate the regeneration process under the condition that the accelerator pedal 60 has been operated to vary the accelerator pedal operation amount by a predetermined amount or greater to deactivate the accelerator pedal 60.

The controller 50 may commence or terminate the regeneration process under the condition that the vehicle speed is higher than the predetermined speed and the accelerator pedal 60 has been operated to vary the accelerator pedal operation amount by a predetermined amount or greater to deactivate the accelerator pedal 60.

The controller 50 may commence or terminate the regeneration process under the condition that the vehicle speed is higher than the predetermined speed and the accelerator pedal 60 has been operated to deactivate the accelerator pedal 60.

The controller 50 may commence or terminate the regeneration process under the condition that the vehicle speed is higher than the predetermined speed and the accelerator pedal 60 is operated to vary the accelerator pedal operation amount by a predetermined amount or greater.

In step S15 of Fig. 2, the controller 50 may commence the regeneration process when the accelerator pedal is operated to increase the accelerator pedal operation amount by a predetermined amount or greater.

In step S15 of Fig. 3, the controller 50 may terminate the regeneration process when the accelerator pedal 60 is operated to increase the accelerator pedal operation amount by a predetermined amount or greater.

In the embodiment discussed above, a combination of the catalytic converter 41 and the filter 42 is used as the purifying device. However, the present invention is not limited to the purifying device of such a form and may be applied to an engine including a different exhaust purifying device as long as the engine operation state is varied when regenerating the exhaust purifying device. For example, in the so-called diesel particulate NOx reduction (DPNR) system that uses a NOx occlusion-reduction catalyst, exhaust gas having a high temperature is necessary for sulfur poisoning recovery control and the like. Thus, in the same manner as the embodiment described above, the operation state of the engine is varied. Accordingly, by applying the present invention, the disturbance felt by the driver may be reduced.

The present invention is not limited to an exhaust purifying device for a diesel engine and may be applied to an exhaust purifying device for a gasoline engine.

### Description of the Reference Numerals

30 ... exhaust passage, 42 ... filter, 50 ... controller functioning as a regeneration process retardation unit.

## Claims

1. An exhaust purifying device for an internal combustion engine including a filter disposed in an exhaust passage for capturing PM suspended in exhaust, the exhaust purifying device estimating an accumulation amount of the PM accumulated in the filter, performing a regeneration process under the condition that the estimated accumulation amount is greater than or equal to a predetermined regeneration commencement value to regenerate a PM capturing capacity of the filter by varying an operation state of the internal combustion engine to bum and remove the PM, and terminating the regeneration process under the condition that the estimated accumulation amount is less than or equal to a predetermined regeneration termination value, the exhaust purifying device comprising:
at least one of a regeneration process commencement retardation unit, which retards a commencement timing of the regeneration process until an operation state of an accelerator is varied, and a regeneration process termination retardation unit, which retards a termination timing of the regeneration process until the operation state of the accelerator is varied,
wherein the regeneration process termination retardation unit terminates the regeneration process under the condition that the accelerator is operated to be deactivated or under the condition that the accelerator is operated to decrease an operation amount of the accelerator by a predetermined amount or greater.

## Patentansprüche

1. Abgasreinigungsvorrichtung für einen Verbrennungsmotor mit einem in einem Abgasdurchlass angeordneten Filter zum Einfangen von im Abgas schwebenden Partikeln, PM, wobei die Abgasreinigungsvorrichtung ein Akkumulationsausmaß der in dem Filter akkumulierten PM schätzt, einen Regenerationsprozess unter der Bedingung ausführt, dass das geschätzte Akkumulationsausmaß größer als oder gleich einem vorbestimmten Regenerationsanfangswert ist, um ein PM-Einfangvermögen des Filters durch Veränderung eines Betriebszustands des Verbrennungsmotors, um die PM zu verbrennen und zu entfernen, zu regenerieren, und den Regenerationsprozess unter der Bedingung beendet, dass das geschätzte Akkumulationsausmaß kleiner als oder gleich einem vorbestimmten Regenerationsbeendigungswert ist, wobei die Abgasreinigungsvorrichtung aufweist:
zumindest eine aus einer Regenerationsprozessanfangs-Verzögerungseinheit, die eine Anfangszeitsteuerung des Regenerationsprozesses verzögert, bis ein Betriebszustand eines Fahrpedals verändert wird, und einer Regenerationsprozessbeendigungs-Verzögerungseinheit, die eine Beendigungszeitsteuerung des Regenerationsprozesses verzögert, bis der Betriebszustand des Fahrpedals verändert wird,
wobei die Regenerationsprozessbeendigungs-Verzögerungseinheit den Regenerationsprozess beendet unter der Bedingung, dass das Fahrpedal betätigt wird, um deaktiviert zu werden, oder unter der Bedingung, dass das Fahrpedal betätigt wird, um ein Betätigungsausmaß des Fahrpedals um ein vorbestimmtes Ausmaß oder ein größeres Ausmaß zu verringern.

## Revendications

1. Dispositif de purification des gaz d'échappement pour un moteur à combustion interne comportant
un filtre disposé dans un passage des gaz d'échappement pour capturer des particules PM en suspension dans des gaz d'échappement, le dispositif de purification des gaz d'échappement estimant une quantité d'accumulation des PM accumulées dans le filtre, mettant en oeuvre un processus de régénération à condition que la quantité d'accumulation estimée soit supérieure ou égale à une valeur prédéterminée de début de régénération pour régénérer une capacité de capture des PM du filtre en modifiant un état de fonctionnement du moteur à combustion interne pour brûler et éliminer les PM, et mettant fin au processus de régénération à condition que la quantité d'accumulation estimée soit inférieure ou égale à une valeur prédéterminée de fin de régénération, le dispositif de purification des gaz d'échappement, comprenant :
au moins l'une d'une unité de retardement de début de processus de régénération, qui retarde un instant de début du processus de régénération jusqu'à ce qu'un état d'actionnement d'un accélérateur soit modifié, et d'une unité de retardement de fin de processus de régénération, qui retarde un instant de fin du processus de régénération jusqu'à ce que l'état d'actionnement de l'accélérateur soit modifié,
dans lequel l'unité de retardement de fin de processus de régénération met fin au processus de régénération à condition que l'accélérateur soit actionné pour être désactivé ou à condition que l'accélérateur soit actionné pour diminuer une quantité d'actionnement de l'accélérateur d'une quantité prédéterminée ou plus.
